# EUROPEAN PATENT SPECIFICATION

(11) **EP 3 656 881 B1**
(45) Date of publication and mention of the grant of the patent: **14.06.2023**
(21) Application number: 18208387.3
(22) Date of filing: 26.11.2018
(51) Int. Cl.: C22B 21/00, C01F 7/14

(54) **PROCESS AND SYSTEM FOR PRODUCING ALUMINA FROM BAUXITE ORE**
VERFAHREN UND SYSTEM ZUR HERSTELLUNG VON ALUMINIUMOXID AUS BAUXITERZ
PROCÉDÉ ET SYSTÈME DE PRODUCTION D'ALUMINE À PARTIR DE MINERAI DE BAUXITE

(43) Date of publication of application: 27.05.2020
(73) Proprietor: Alunorte -Alumina do Norte do Brasil S.A., 68445-000 Barcarena Pará (BR)
(72) Inventor: LaMacchia, Robert, N-0240 Oslo (NO); Penna, Wlademir, Coodanup, WA 6210 (AU)
(74) Representative: Hydro IPD

(56) References cited:
- US-A- 2 243 060
- US-A- 4 324 769
- US-A- 4 483 830
- US-A- 5 869 020
- US-A1- 2017 260 606

## Description

### Technical Field

The present document relates to a process for producing alumina (aluminium oxide) from bauxite ore that is based on a modified Bayer process and enables the more efficient production of alumina. The present document also relates to a system for carrying out the process.

### Technical Background

Alumina is the starting material for the industrial production of aluminium. Alumina may be produced from bauxite ore (also referred to as bauxite in the following). Industrial production of alumina from bauxite is carried out based on the Bayer process that is e.g. described in German patent DE 43977 from 1887. While some steps of the process have been modified compared to the process described in DE 43977, at present, the processes used commercially on an industrial scale involve dissolving part of the bauxite with caustic soda and precipitating aluminium hydroxide from the dissolution product by using aluminium hydroxide or similar compounds as seeds in a continuous steady-state process. A part of the aluminium hydroxide produced in that manner may be recycled as precipitation seeds. The remainder of the aluminium hydroxide is calcined to produce the alumina. The dissolution of bauxite using caustic soda is also called digestion. A modified Bayer process is e.g. described in US patent US6299846B1. According to said modified process, the bauxite is digested in two separate processes in parallel, wherein each of the two processes uses a different temperature and reaction time. It is thought that digesting the bauxite in two separate process increases the efficiency of the process. However, a more efficient process for producing alumina from bauxite ore is desirable.

US 4 324 769 A is directed to a method based on the Bayer process of extraction of alumina from aluminous ores such as bauxite and is applicable to the recovery and production of alumina with a low iron oxide content, from aluminous ores wherein the alumina is predominately in the form of alumina trihydrate but a substantial portion of the total alumina is in the form of monohydrate.

US 4 483 830 relates to a process for recovery of alumina and soda from materials containing sodium aluminosilicates, such as red mud and desilication products, comprises treating said materials with lime at elevated temperature and pressure.

US 5 869 020 relates to a process for the production of aluminium hydroxide by digesting bauxite with an alkali solution and precipitating aluminium hydroxide from the digestion solution.

### Summary of the Invention

The object of the present invention is to provide a more efficient process for the production of alumina from bauxite ore and a corresponding system for carrying out the process. To solve this object, the present invention according to aspects provides a process for producing alumina from bauxite ore in a continuous steady-state manner comprising (a) preparing a bauxite slurry by mixing the bauxite ore with at least a part of an Al-depleted liquid fraction, (b) separating the bauxite slurry into at least a first bauxite slurry portion and a second bauxite slurry portion; (c) mixing the first bauxite slurry portion with an alkaline substance to obtain a first bauxite alkaline mixture; (d) holding the first bauxite alkaline mixture within a first temperature range for a first period of time such as to obtain a first reaction product comprising a first solid fraction and a first liquid fraction; (e) separating the first solid fraction from the first liquid fraction, (f) mixing the first liquid fraction with the second bauxite slurry portion such as to obtain a second bauxite alkaline mixture, (g) holding the second bauxite alkaline mixture within a second temperature range for a second period of time at a temperature and at a pressure above ambient pressure (e.g. above atmospheric boiling point), such as to obtain a second reaction product comprising a second solid fraction and a second liquid fraction; (h) separating the second solid fraction from the second liquid fraction prior to reducing at least the second liquid fraction to ambient pressure (e.g. atmospheric pressure); (i) reducing the pressure of the second liquid fraction, and optionally additionally the pressure of the second solid fraction, to ambient pressure after separating the second solid fraction from the second liquid fraction; (j) precipitating Al-compounds from the second liquid fraction, after reducing the pressure of the second liquid fraction and after separating the second solid fraction from the second liquid fraction, such as to obtain solid Al-compounds and an Al-depleted liquid fraction; (k) drying the solid Al-compounds such as to obtain alumina, wherein the first temperature range is lower than the second temperature range, and wherein the first period of time period is shorter than the second period of time. Wherein the first temperature range is lower than the second temperature range may mean that the first temperature range are partially overlapping and that the first temperature range has at least one point that is outside of the second temperature range or that the first and second temperature ranges are not overlapping.

According to embodiments of the invention, the second bauxite slurry portion may be desilicated before mixing the second bauxite slurry portion with the first liquid fraction to obtain the second bauxite alkaline mixture.

According to embodiments of the invention, the first period of time may be between 1 minute and 30 minutes, in particular between 1 and 25 minutes.

According to embodiments of the invention, the first temperature range may be from 100 to 135 °C.

According to embodiments of the invention, the second period of time may be between 30 and 90 minutes, in particular between 30 and 60 minutes.

According to embodiments of the invention, the second temperature range may be from 140 to 180 °C, in particular between 140 and 160°C.

According to embodiments of the invention, a weight ratio per unit time of first bauxite slurry portion to second bauxite slurry portion (first bauxite slurry portion:second bauxite slurry portion) may be between 1:1 and 4:1.

According to embodiments of the invention, the precipitating Al-compounds from the second liquid fraction may comprise adding at least a part of previously obtained Al-compounds to the second liquid fraction as precipitation seeds.

According to embodiments of the invention, the alkaline substance may be a liquid solution, e.g. an alkaline aqueous solution that comprises at least one or more of: NaOH, Na₂CO₃, Na[Al(OH)₄] and in addition least one or more of: NaCl, Na₂SO₄, Na₂SiO₃, Na₂C₂O₄, NOOC (Non Oxalate Organic Carbon). The NOOC may be a sodium salt. In particular the alkaline substance may be an aqueous solution that may comprise sodium hydroxide or may comprise sodium hydroxide and sodium carbonate. However, according to the present invention, the alkaline substance is not particularly limited as long as it can at least partially dissolve bauxite ore.

According to embodiments of the invention, before the Al-depleted liquid fraction mixed with the bauxite slurry, water may be evaporated from the Al-depleted liquid fraction, for example by using one or more flash tanks.

According to embodiments of the invention, the first and/or the second solid fraction may be washed to recover sodium-comprising components contained in the first and second solid fraction.

According to a further aspect, the present invention provides a system for producing alumina from bauxite ore in a continuous steady-state manner comprising a first digester having an inlet for a first bauxite alkaline mixture, that is e.g. obtained by mixing bauxite ore with an Al-depleted liquid fraction to obtain a bauxite slurry, by separating the bauxite slurry into a first bauxite slurry portion and a second bauxite slurry portion and by mixing the first bauxite ore portion with an alkaline substance, and an outlet for a first reaction product comprising a first solid fraction and a first liquid fraction, a second digester having an inlet for a second bauxite alkaline mixture and an outlet for a second reaction product comprising a second solid fraction and a second liquid fraction, a first solid-liquid separator for separating the first liquid fraction from the first solid fraction having an inlet that is connected with the outlet of the first digester and having an outlet for the first solid fraction and an outlet for the first liquid fraction, wherein the outlet for the first liquid fraction of the first solid-liquid separator is in fluid communication with the inlet of the second digester via a line, wherein a second bauxite slurry portion is added to the first liquid fraction flowing along the line, a second solid-liquid separator for separating the second solid fraction from the second solid fraction having an inlet that is fluidly connected with the outlet of the second digester, and having an outlet for the second solid fraction and an outlet for the second liquid fraction, a precipitation vessel having an inlet that is in fluid communication with the outlet for the second liquid fraction of the second solid-liquid separator and having an outlet for Al-depleted liquid fraction and an outlet for solid AI-compounds, wherein the precipitation vessel is configured to precipitate solid AI-compounds from the second liquid fraction, a drying apparatus that is connected with the outlet for solid AI-compounds for drying the solid Al-compounds such as to obtain alumina, wherein a means for reducing pressure and temperature is in an upstream-downstream direction provided between the outlet for the second liquid phase of the second solid-liquid separator and the inlet of the precipitation vessel, and wherein during use of the system a pressure of the second reaction product entering the inlet of the second sold-liquid separator is equal to or higher than a pressure in the second digester. The pressure may e.g. be higher if the second reaction product is additionally compressed, e.g. by using compressed air, when the solid-liquid separator is implemented as a pressure filter or the like to effect higher flow rates. The system may be configured to carry out the process described above.

Further embodiments of the invention are described in the claims.

Further aspects and embodiments of the invention are described in the following and are apparent from the accompanying figures.

### Short Description of the Figures

Fig. 1 shows a schematic view of process steps according to the invention, wherein some mass flows are schematically shown by lines connecting the boxes representing process steps.
Fig. 2 shows a schematic view of a system for carrying out the process according to the invention.

### Detailed Description

The invention is set out in the appended set of claims.

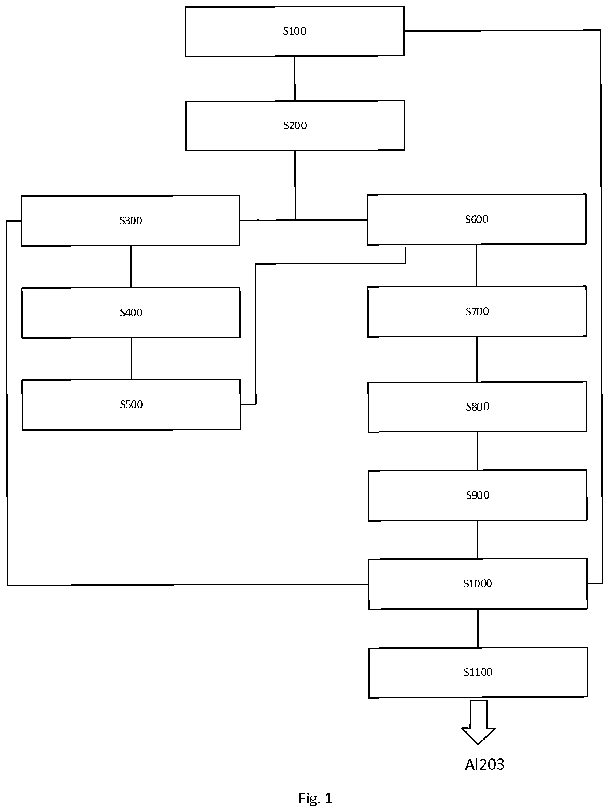

With reference to Fig. 1, a process for producing alumina from bauxite ore according to embodiments of the invention is described. The process according to embodiments of the invention may be executed in a continuous steady-state manner for a period of time. That is, a dynamic steady-state may be reached based on at least substantially continuous input and output mass flows, wherein however also transient states may be reached when process parameters such as temperatures, reaction times, pressures, input amounts and qualities are changed to adapt to changes in demanded output, quality in bauxite ore, etc. Bauxite ore or bauxite as it is used in this document may refer to any substance that comprises aluminium (Al). Bauxite ore, bauxite and ore as used herein may also refer to laterite or other ores that comprise at least 50% based on the total weight, optionally at least 70% based on the total weight, of alumina hydroxide, such as gibbsite. Alumina as used herein refers to aluminium oxide, wherein the majority of the alumina produced according to the present process is in the form of smelter grade alumina (SGA). Bauxite ore may amongst others also comprise silicon, e.g. in the form of kaolinite.

The process may use bauxite ore as a material. The bauxite ore may for example be provided by a mine and may be chemically and/or mechanically treated such as to obtain a desired particle size distribution for the following steps. In the following, bauxite ore, bauxite and ore are used interchangeably unless noted otherwise. For example, the bauxite ore may be mechanically treated, e.g. by milling, such as to obtain a p80 particle size between 100 and 500 µm. When the particles are too small, there can be flowability issues of the resulting slurry or excessive power usage in the grinding equipment. When the particles are too large, erosion of process equipment can ensue and the gibbsite extraction kinetics can be compromised.

The bauxite ore may be mixed with at least a part of an Al-depleted liquid fraction in step S100 such as to obtain a bauxite slurry. The Al-depleted liquid fraction is supplied from further downstream of the process and is recycled by supplying it upstream in process in a loop-like manner. It is described further below how the Al-depleted liquid fraction is obtained.

With reference to S200, the bauxite slurry obtained in step S100 may then be separated/divided into a first bauxite slurry portion and a second bauxite slurry portion. For example, a stream of bauxite slurry obtained at step S100 may be continuously separated according to a predetermined ratio into the first bauxite slurry portion and the second bauxite slurry portion. A weight ratio per unit time of first bauxite slurry portion to second bauxite slurry portion (first bauxite slurry portion:second bauxite slurry portion) in step S200 may be between 1:1 and 4:1. Said ratio allows the process to be carried out in an efficient manner with high yield and low use of alkaline substance.

In step S300, the first bauxite slurry portion is mixed with an alkaline substance to obtain a first bauxite alkaline mixture. In this document, the bauxite alkaline mixture is referred to as the first bauxite alkaline mixture to distinguish it from other bauxite alkaline mixtures described herein. The word "first" in first bauxite alkaline mixture has no implications with respect to the time when the first bauxite alkaline mixture is obtained compared to other bauxite alkaline mixtures described herein. The first bauxite alkaline mixture may be a suspension comprising liquid and solid phases.

According to the invention, an alkaline substance may be an alkaline-component comprising solution. For example, the alkaline substance may be a liquid solution, e.g. an alkaline aqueous solution that comprises at least one or more of: NaOH, Na₂CO₃, Na[Al(OH)₄] and in addition least one or more of: NaCl, Na₂SO₄, Na₂SiO₃, Na₂C₂O₄, NOOC (Non Oxalate Organic Carbon). The NOOC may be a sodium salt. In particular the alkaline substance may be an aqueous solution that may comprise sodium hydroxide or may comprise sodium hydroxide and sodium carbonate. The alkaline substance may for example be an aqueous solution of sodium hydroxide (also called caustic soda). As will be further elaborated below, the alkaline substance utilized in step S300 may also be a part of the Al-depleted liquid fraction, e.g. the remainder of the Al-depleted liquid fraction that is not used to prepare the bauxite slurry, or may be a mixture of a freshly introduced (non-recycled) alkaline substance with a part of the Al-depleted liquid fraction. That is, the alkaline substance may be at least partially recycled, e.g. when the alkaline substance comprises Al-depleted liquid fraction.

In step S400, the first bauxite alkaline mixture is held within a first temperature range for a first period of time such as to obtain a first reaction product comprising a first solid fraction and a first liquid fraction. In other words, the alkaline substance (c.f. S300) and (alkaline components contained in the Al-depleted liquid fraction) reacts with the first bauxite slurry portion for a predetermined reaction (first period of time) time while the first bauxite alkaline mixture is held within a first temperature range. According to embodiments of the invention, step S400 may be carried out such as to utilize the different dissolution kinetics of aluminium-containing compounds (e.g. gibbsite) and silicon-containing compounds (e.g. kaolinite) when exposed to an alkaline substance. As will be described in further detail below, according to the present invention, alumina is produced by dissolving aluminium-containing compounds included in the bauxite ore using the alkaline substance and then precipitating alumina from the dissolved aluminium in a controlled manner. As the process according to the present invention aims to produce alumina, each mole of alkaline substance that is consumed by a reaction with silicon-containing compounds included in the bauxite ore is lost without contributing to the alumina yield of the process. As the dissolution kinetics for most of the aluminium-containing compounds are faster than the ones for kaolin or other silicon-containing clay minerals, the yield of the present process can be improved when the reaction time is controlled so that a (dynamic) thermodynamic equilibrium is not reached, as due to the different kinetics of dissolution, more alumina than silicon is dissolved before the thermodynamic equilibrium is reached. Step S400 is also referred to as "Differential Extraction", as it utilizes a differential in reaction kinetics for aluminium and silicon dissolving reactions. Depending on the bauxite ore quality and the composition of the alkaline substance, the first period of time may for example be in the range from 1 minute to 30 minutes, e.g. from 1 minute to 25 minutes. The first temperature range may for example be from 100°C to 135°C. When the first period of time is shorter than that, not enough of aluminium might be dissolved to achieve a high efficiency of the process. When the first period of time is longer than that, there is a risk that the process comes close to or reaches the thermodynamic equilibrium resulting in a loss of yield/efficiency of the process, in particular because more alkaline substance is wasted by dissolving compounds that are undesirable in solution. When the first temperature is too low, there is a risk that no meaningful amount of aluminium is dissolved as the reaction kinetics are too slow. When the first temperature is too high, the reaction kinetics become so fast that process control becomes difficult and inefficient. Step S400 will generate a first reaction product having a first liquid fraction and a first solid fraction. The first solid fraction contains all the residue that was not dissolved by the alkaline substance in step S400 during the first period of time or precipitated (e.g. the de-silication product, also referred to as DSP) during the reaction in S400. The first liquid fraction comprises amongst others dissolved aluminium and is subsequently further processed to produce the alumina.

In step S500, the first liquid fraction is separated from the first solid fraction. According to the present invention, to limit the undesired dissolution of silicon, the separation of first solid and liquid fractions is carried out using a fast process such as pressure decanting or pressure filtration. When the first solid fraction is separated from the first liquid fraction, the undesired dissolution of silicon is stopped, as the first liquid fraction is no longer in contact with silicon-containing compounds that are in the solid fraction. The first solid fraction is process waste and is disposed, e.g. after washing to recover rests of the alkaline substance contained therein. The first liquid fraction is further processed as described below. It is noted that the process according to the present invention is a continuous steady-state process, accordingly, steps S400 and S500 can be considered as upstream and downstream process steps that are carried out concurrently and continuously.

With further reference to Fig. 1, the second bauxite slurry portion obtained in step S200 is processed as described in the following.

In step S600, the second bauxite slurry portion is mixed with the first liquid fraction obtained in step S500 to obtain a second bauxite alkaline mixture. In this document, the such obtained bauxite alkaline mixture is referred to as the second bauxite alkaline mixture to distinguish it from other bauxite alkaline mixtures described herein. The word "second" in second bauxite alkaline mixture has no implications with respect to the time when the second bauxite alkaline mixture is obtained compared to other bauxite alkaline mixtures described herein, as the process described herein is a continuous steady-state process. The second bauxite alkaline mixture may be a suspension comprising liquid and solid phases.

Before step S600 is carried out, the second bauxite slurry mixture may optionally be desilicated by holding the second bauxite slurry at -50-60% solids concentration (based on weight) at a temperature of between 90-105° C for between 8 and 20 hours in at least one, e.g. 2 to 5, continuously stirred tank reactor (also referred to as CSTR); wherein the CSTR approximation can e.g. be achieved through slurry agitation, slurry raking and/or slurry recirculation using centrifugal pumps. This may ensure that at least part of the second bauxite slurry portion's reactive silica is converted to DSP (a solid) , which assists in reducing the silica content in the mixture formed from the first liquid fraction and the second bauxite alkaline mixture which combine in step S600.

In step S700, the second bauxite alkaline mixture is held within a second temperature range for a second period of time such as to obtain a second reaction product comprising a second solid fraction and a second liquid fraction. In other words, the alkaline substance reacts with the second bauxite slurry portion, in particular with the solids contained therein, for a predetermined reaction time (second period of time) while the second bauxite alkaline mixture is held within a second temperature range. Step S700 is carried out such that the pressure of the second bauxite alkaline mixture is higher than atmospheric pressure, wherein the pressure is controlled by controlling the temperature of the second bauxite alkaline mixture and by carrying out step S700 using a pressure-tight apparatus.

In a process that only comprises the differential extraction according to step S400, the maximum yield of the first liquid fraction is largely controlled by the first temperature range.

The process efficiency, as defined as loss of alkaline substance to residue (solid fraction), requires that step S400 is carried out at a lower temperature (within a lower first temperature range) so the process can be controlled to a more practical residence time, i.e. first time period. The disadvantage of a process that only comprises step S400 and not additionally step S700 as the present invention is that the yield suffers, which is why step S700, also referred to as sweetening digestion, is carried out according to the invention. Said step S700 is according to the present invention carried out at a higher temperature than step S400 and runs utilizing a longer residence time, i.e. second period of time. The higher temperature and longer residence time in step S700 allow for a greater amount of alumina to be dissolved into the liquid fraction, which therefore increases the yield of this liquid fraction when compared to a process that only comprises a differential extraction step.

Depending on the bauxite ore quality and the composition of the alkaline substance, the second period of time may for example be in the range from 30 minutes to 90 minutes. The second temperature range may for example be from 140°C to 180°C. When the second period of time is shorter than that, not enough undesired silicon may precipitate from the second liquid phase into the second solid phase, resulting in a silicon content in the end product of the process that is too high. When the second period of time is longer than that, design of a system for carrying out the process becomes inefficient, as the process is carried out as a continuous process and consequently volume is required for the second bauxite alkaline mixture to pass through the system in the second period of time. When the second temperature is too low, there is a risk that no meaningful amount of aluminium is dissolved and at the same time not enough undesired silicon is precipitated from the liquid into the solid fraction as the reaction kinetics are too slow. When the second temperature is too high, the process efficiency is reduced due to the energy required for heating the second bauxite alkaline mixture and the higher capital cost associated with more expensive construction materials. Step S700 will generate a second reaction product comprising a second liquid fraction and a second solid fraction. The second solid fraction contains all the residue that was not dissolved by the alkaline substance in step S700 during the second period of time or was precipitated during the reaction in S700. According to the invention, in step S700 not all of the solid content of the second bauxite slurry portion is dissolved and a solid residue, the second solid fraction, remains. The second liquid fraction comprises amongst others dissolved aluminium and is subsequently further processed to produce the alumina.

In step S800, the second reaction product is treated in that the second liquid fraction is separated from the second solid fraction. According to the invention, step S800 takes place before the pressure and temperature of the second reaction product are reduced. In conventional processes, the separation of liquid and solid phases takes place after a reduction of pressure and temperature of the second reaction product. However, the present inventors have realized that the yield of the process can be improved by performing the separation of second solid and liquid fractions while pressure and temperature are still higher than ambient temperature and ambient pressure. The reasons for performing the step S800 before a reduction of pressure and/or temperature are as follows. The present inventors have found that the solubility for aluminium in the first liquid fraction is higher at higher temperatures. Accordingly, the driving force for precipitation, for example the change in free-energy by precipitation, of (solid) aluminium-containing compounds is higher at lower temperatures. The present inventors have also found that when the temperature of the second bauxite alkaline mixture is reduced while the second liquid and solid fractions still form a suspension and are in contact with each other, the second solid fraction may serve as a nucleation site for the precipitation of aluminium-containing compounds that are subsequently lost as process waste with the second solid fraction. Further, while the kinetics for precipitation are also faster at higher temperatures, the lower thermodynamic driving force for precipitation, which may be zero according to the present invention, has more influence on the precipitation rate resulting in a lower net precipitation rate or no precipitation at all of aluminium at higher temperatures. A disadvantage of performing the separation of the second liquid and solid fraction at high temperature/pressure is that pressure-rated separation equipment that is able to withstand the higher temperatures is required. An example for such a pressure-rated separation equipment that can be used to carry out step S800 is e.g. described in US5833865A, the whole content of which is incorporated herein by this reference. However, the present inventors have found that the yield gains of the present process according to the invention compared to the conventional process can offset this disadvantage. The second solid fraction obtained in step S800 may be discarded as process waste, e.g. after washing it to recover alkaline.

In step S900 the pressure of the second liquid fraction is reduced to ambient pressure (e.g. atmospheric pressure). For example, the second liquid fraction may be led via at least one, e.g. two to four, flash tanks in which the water content of the second liquid fraction is reduced by the "flashing" of water vapor while also temperature and pressure of the second liquid fraction are reduced.

The pressure and temperature of the second solid phase may also be reduced. As mentioned, the second solid phase may be washed to recover alkaline, e.g. in the form of sodium-containing compounds, and may then be discarded as process waste.

In step S1000 aluminium-compounds, e.g. aluminium hydroxide, are precipitated from the second liquid fraction after the temperature and pressure thereof have been reduced in step S900. As mentioned above, the lower temperature also lowers the maximum solubility of aluminium in the second liquid phase and consequently increases the thermodynamic driving for the precipitation of aluminium compounds. To improve the precipitation and the yield, seeds may be added to the second liquid fraction that act as nuclei for the precipitation of aluminum compounds. Said seeds may for example be aluminium hydroxide or alumina seeds that have been previously produced by the process. As the second liquid fraction becomes more and more depleted in aluminium by the precipitation of (solid) aluminium-compounds, it is herein referred to as Al-depleted liquid fraction after step S1000.

After the precipitation of the aluminium compounds in step S1000, the second liquid fraction, now referred to as Al-depleted liquid fraction, may be fed back into the process further upstream and may e.g. be mixed with the bauxite ore to obtain the bauxite slurry and/or the first and/or second bauxite slurry portions to obtain the first and/or second bauxite alkaline mixture as described above.

In step S1100, the aluminium compounds obtained in step S1000 may be dried, e.g. by using heat (also referred to as calcination), to remove moisture and chemically bound water such as to obtain alumina (aluminium oxide). The alumina may then for example be used in other processes, e.g. to produce aluminium metal by electrolysis, etc. It is noted that the process according to the present invention is a continuous steady-state process, accordingly the steps described herein are, unless it is described to the contrary, carried out concurrently and continuously.

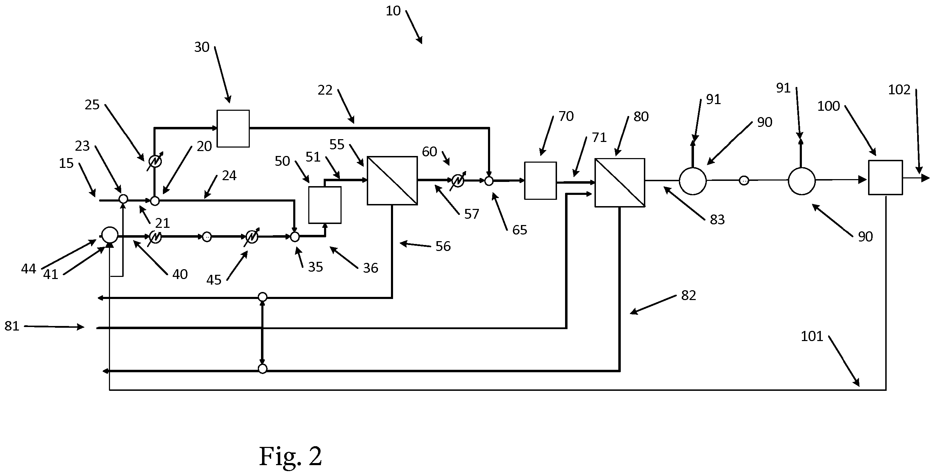

With reference to Fig. 2, a system 10 for carrying out the process according to the present invention is described. It is noted that all features with respect to the process apply for the system in a corresponding manner and vice versa unless it is noted otherwise.

The system 10 may comprise a bauxite inlet 15. The bauxite inlet 15 may for example be a conveying system, such as a conduit or a belt, that transports bauxite ore from a storage or a mine (not shown). At junction 23, the bauxite ore is mixed with a liquid, e.g. the Al-depleted liquid fraction (c.f. S1000) to obtain a bauxite slurry. The liquid may be supplied to junction 23 via a line 101 that is described further below. A line 21 may transport the bauxite slurry further to a separator 20. The separator 20 may separate the bauxite slurry at least into a first bauxite slurry portion and a second bauxite slurry portion (c.f. 200). Upstream or downstream of the separator, the bauxite slurry, e.g. the first bauxite slurry portion and the second bauxite slurry portion, may optionally be mixed with water to dilute the slurry to facilitate processing. The separator 20 may for example be a Y-shaped pipe having one inlet and two outlets with diameters having such a ratio as to correspond to the ration of first bauxite ore portion to second bauxite ore portion. One or more pumps may be provided with each outlet of the separator 20 to generate a pressure in the slurry that facilitates transport. One outlet of the separator 20 may be connected to a line 24 for conveying the first bauxite slurry portion via junction 35 and line 36 eventually to a first digester 50 that is described further below. A further outlet of the separator 20 may be connected to a line 22 for conveying the second bauxite slurry portion from the separator 20 eventually to a second digester 70 that is described further below.

The system 10 may optionally further comprise means for desilication 30 provided along line 22. The means for desilication 30 may be provided by a tank or more than one tank with slurry mixing, targeting a residence time between 8 and 18 hours and temperature of 95-105 °C. It is noted that the means for desilication 30 is optional and may be omitted, e.g. when the ore that is inputted via the bauxite inlet 15 has a low silicon content and consequently the second bauxite slurry portion has a low silicon content.

At junction 35, the line 24 is connected to a line 40 that transports the alkaline substance, e.g. the alkaline solution. Line 40 may on the other end thereof be connected with an outlet of a junction 41. Junction 41 may have an outlet and two inlets. An outlet of junction 41 may be connected with the line 40. An inlet of junction 41 may be connected to the line 101 that supplies an Al-depleted liquid fraction as described further below. Another inlet of junction 41 may be connected to an inlet for fresh alkaline 44, e.g. for alkaline that has not been used in the process described herein previously. The fresh alkaline may for example be caustic soda or a different alkaline. The fresh alkaline may be supplied in solid form or liquid form and may be mixed at junction 41 with the Al-depleted liquid fraction that is supplied to junction 41 via line 101. To facilitate the mixing, the junction 41 may be provided with means for facilitating mixing such as stirrers or the like. Junction 41 may also have an inlet for water (not shown) to adjust the pH content of the mixture generated at junction 41. For example, junction 41 may be implemented as a tank having a volume that may act as a buffer storage for alkaline substance.

The alkaline substance that is supplied from junction 41 via line 40 to junction 35 may have a temperature that is higher than the ambient temperature when it arrives at junction 35. To induce the higher temperature, at least one heater 45, e.g. two to four heaters, may be provided along line 40. Heater 45 may for example be implemented as a heat exchanger that heats the alkaline substance using steam that is generated as a byproduct of the process, e.g. by flash tanks, described herein. However, the means by which the alkaline substance that is supplied via line 40 is heated is not particularly limited.

Junction 35 may comprise means for facilitating mixing of the first bauxite slurry portion supplied via the line 24 and the alkaline substance supplied via the line 40 such as a mechanical stirrer or the like. An outlet of junction 35 may be connected to line 36 that is used to supply the first bauxite alkaline mixture, c.f. S300, that is generated by mixing the first bauxite slurry portion and the alkaline substance at junction 35, to the first digester 50.

The system 10 may further comprise the first digester 50. The first digester 50 is herein also referred to as differential digester 50. The differential digester 50 may be a reaction vessel for carrying out the at least partial dissolution ("digestion") of the solid part of the bauxite alkaline mixture, c.f. step S400. In alternative embodiments, the first bauxite slurry portion and the alkaline substance may be supplied to the first digester 50 via separate lines and may be introduced into the first digester 50 using separate inlets and may then form a mixture when inside the first digester 50.

An outlet of the differential digester 50 may be connected to a first solid-liquid separator 55 via line 51 to supply the first reaction product generated by the differential digester 50 to an inlet of the first solid-liquid separator 55. The first reaction product that is input into the first solid-liquid separator 55 is separated by the first solid-liquid separator 55 into the first solid fraction and the first liquid fraction, c.f. step S500. The first solid-liquid separator 55 may for example be implemented as a sieve having a mesh size that only allows the liquid phase to pass through so that liquid and solid phases are separated. The system 10 may further comprise a line 56 that connects the outlet for the first solid fraction of the first solid-liquid separator 55 with an outside of the system 10. The first solid fraction may be let out from the system 10 via line 56 for further processing, e.g. to recover alkaline from the first sold fraction, and/or deposition and is generally not used further in the process.

The system 10 may further comprise a line 57 that connects an outlet for the first liquid fraction of the first solid-liquid separator 55 with a second digester 70. The second digester 70 is also referred to as sweetening digester 70 in the following. One or more heaters 60 may be provided along the line 57 such as to increase a temperature of the material that is conveyed via the line 57. A junction 65 may be provided along line 57 to connect line 57 and line 22. At junction 65, the second bauxite alkaline mixture is obtained by mixing the first liquid fraction and the second bauxite slurry portion that is supplied via line 22. Junction 65 may be provided with stirrers or the other means to facilitate mixing the first liquid fraction and the second bauxite slurry portion. Said junction 65 may be used to implement step S600 described above. The junction 65 may be provided upstream or downstream of the heater(s) 60 or between the heaters 60, if there are several separate heaters provided along line 57. Alternatively, line 22 may be directly connected with the sweetening digester 70 via a separate input of sweetening digester 70 to implement step S600. In this case, similarly as in the case of the first bauxite alkaline mixture, the second bauxite alkaline mixture may in this case be obtained inside the second digester 70.

As mentioned, the system 10 comprises the second digester 70 that is also referred to as sweetening digester 70. The sweetening digester 70 may be a reaction vessel and may be used to carry out step S700 described above. A transit time of the second bauxite alkaline mixture through the sweetening digester 70 may be longer than a transit time of the first bauxite alkaline mixture through the differential digester 50. A reaction temperature in the sweetening digester 70 may be higher than a reaction temperature in the differential digester 50. The second reaction product comprising the second liquid phase and the second solid phase is generated by the sweetening digestor 70 as the second bauxite alkaline mixture transits through the sweetening digester 70 and is let out from the sweetening digester 70 via an outlet thereof.

The system 10 may further comprise a second solid-liquid separator 80 and a line 71 that connects the outlet of the sweetening digester 70 with an inlet of the second solid-liquid separator 80. The second solid-liquid separator 80 may be used to carry out step S800 as described above. The second solid-liquid separator 80 may be provided such that the second reaction product that is supplied to the inlet of the second solid-liquid separator 80 has a pressure that is higher than the ambient pressure (e.g. atmospheric pressure, e.g. standard pressure according to IUPAC), wherein the pressure is related to the temperature of the reaction product. For example, the second reaction product that is supplied to the second solid-liquid separator 80 may have a temperature that is higher than the atmospheric boiling temperature (the boiling temperature at standard pressure according to IUPAC [101.325 kPa]) of the second reaction product. For example, the second solid-liquid separator 80 may be implemented as a pressure filter. An example of a sold-liquid separator 80 that can be used according to the present invention is e.g. described in US5833865A mentioned above. A pressure at the inlet of the second solid-liquid separator 80 may be equal to or higher than a pressure in the sweetening digester 70. The pressure in the inlet may e.g. be higher when pressure is added to the second reaction product, e.g. by introducing compressed air, to support separation in the second sold-liquid separator 80.

A line 82 may be provided that is connected to an outlet of the sold-liquid separator 80 for the second solid phase to convey the second solid phase to an outside of the system 10. . The second solid fraction may be let out from the system 10 via line 82 for further processing, e.g. to recover alkaline substance, and/or deposition.

The system 10 may optionally further comprise a line 81 for supplying a washing liquid, for e.g. water or a dilute alkaline liquid or the like, to the second solid-liquid separator 80. The line 81 may supply the water from an external water source (not shown) to the solid-liquid separator 80. The water may be used to wash the second solid phase in the second solid-liquid separator 80, e.g. to recover alkaline substance. In addition or as an alternative, the line 81 may be connected with line 56 and/or line 82 to dilute/wash the first solid fraction and or the second solid fraction before further processing or deposition. This may reduce the content of alkaline substance in the first and second solid fractions.

The system 10 may comprise a line 83 that connects an outlet of the second solid-liquid separator 80 for the second liquid phase with an inlet of precipitation vessel 100. One or more means for reducing pressure and temperature 90 may be provided along line 83. The means for reducing pressure and temperature 90 may be used to carry out step S900. The means for reducing pressure and temperature 90 may for example be implemented as a heat exchanger or a flash tank. When the means for reducing temperature and pressure 90 is implemented as a flash tank, a reduction of the water content of the second liquid fraction in addition to a reduction of temperature and pressure can be achieved. In Fig. 2, an embodiment of a system 10 with two means for reducing pressure and temperature 90 implemented as flash tanks that are provided along line 83 is shown. However, the number of means for reducing pressure and temperature 90 provided along line 83 is not particularly limited. The water that is evaporated as steam from the second liquid fraction by the flash tanks is schematically indicated in Fig. 2 with arrows 91. The steam generated by a flash tank may optionally be used to operate the various heaters 25, 45, 60 described herein.

With further reference to Fig. 2, the system 10 may further comprise the precipitation vessel 100. The precipitation vessel 100 may be used to carry out step S1000, that is to precipitate Al-compounds from the second liquid fraction such as to obtain solid Al-compounds and the Al-depleted liquid fraction. For example, the precipitation vessel 100 may be configured as described in DE 43977 mentioned above and may comprise a series of tanks having stirrers. As the temperature of the second liquid fraction is lower in the precipitation vessel 100 than in the sweetening digester 70 or the second solid-liquid separator 80 due to a temperature reduction that takes place when the second liquid fraction passes through line 83, the thermodynamic driving force for precipitation of aluminium from the second liquid phase gets higher and solid Al compounds are therefore thermodynamically stabilized and precipitate. Al compounds may be added to the precipitation vessel 100 as nuclei to facilitate further precipitation (not shown).

The solid Al compounds generated in the precipitation vessel 100 may be collected and may be removed from the precipitation vessel via line 102. The Al compounds may subsequently be conveyed to a drying apparatus (not shown), e.g. a furnace, to be dried to remove water to obtain alumina. The drying apparatus may implement step S1100 as described above. For example, a large part of the solid Al compounds generated in the precipitation vessel 100 is aluminium hydroxide. Drying of the aluminium hydroxide by exposing the aluminium hydroxide to heat results in alumina, which is the final product of the process described herein.

The liquid phase in the precipitation vessel 100 becomes more and more depleted in aluminium as more and more Al compounds are precipitated and removed via line 102. The liquid Al-depleted fraction may be supplied via line 101 to junction 41 to generate the alkaline substance and to junction 23 to generate the bauxite slurry (c.f. step S100). As schematically shown in Fig. 2, line 101 may branch off to connect to junction 41 and to junction 23 to supply the Al-depleted liquid fraction.

## Claims

1. Process for producing alumina from bauxite ore in a continuous steady-state manner comprising
(a) preparing a bauxite slurry by mixing the bauxite ore with at least a part of an Al-depleted liquid fraction (S100),
(b) separating the bauxite slurry into at least a first bauxite slurry portion and a second bauxite slurry portion (S200);
(c) mixing the first bauxite slurry portion with an alkaline substance to obtain a first bauxite alkaline mixture (S300);
(d) holding the first bauxite alkaline mixture within a first temperature range for a first period of time such as to obtain a first reaction product comprising a first solid fraction and a first liquid fraction (S400);
(e) separating the first solid fraction from the first liquid fraction (S500),
(f) mixing the first liquid fraction with the second bauxite slurry portion such as to obtain a second bauxite alkaline mixture (S600),
(g) holding the second bauxite alkaline mixture within a second temperature range for a second period of time and above ambient pressure, such as to obtain a second reaction product comprising a second solid fraction and a second liquid fraction (S700);
(h) separating the second solid fraction from the second liquid fraction prior to reducing the pressure of at least the second liquid fraction to ambient pressure (S800);
(i) reducing the pressure of the second liquid fraction, and optionally additionally the pressure of the second solid fraction, to ambient pressure (S900);
(j) precipitating Al-compounds from the second liquid fraction after reducing the pressure thereof such as to obtain solid AI-compounds and the Al-depleted liquid fraction (S1000);
(k) drying the solid Al-compounds such as to obtain alumina (S1100),
wherein the first temperature range is lower than the second temperature range, and wherein the first period of time period is shorter than the second period of time.

2. Process according to claim 1, wherein the second bauxite slurry portion is desilicated before the mixing of the first liquid fraction with the second bauxite slurry portion to obtain the second bauxite alkaline mixture.

3. Process according to claim 1 or 2, wherein the first period of time is 1-30 minutes.

4. Process according to any preceding claim, wherein the first temperature range is 100-135 °C.

5. Process according to any preceding claim, wherein the second period of time is 30-90 minutes

6. Process according to any preceding claim, wherein the second temperature range is 140-180 °C.

7. Process according to any preceding claim, wherein a weight ratio per unit time of first bauxite slurry portion to second bauxite slurry portion is between 1:1 and 4:1.

8. Process according to any preceding claim, wherein the precipitating Al-compounds from the second liquid fraction comprises adding at least a part of the Al-compounds obtained earlier to the second liquid fraction as precipitation seeds.

9. Process according to any preceding claim, wherein the alkaline substance is a liquid solution, in particular an alkaline aqueous solution that comprises at least one or more of: NaOH, Na₂CO₃, Na[Al(OH)₄] and in addition least one or more of: NaCl, Na₂SO₄, Na₂SiO₃, Na₂C₂O₄, NOOC (Non Oxalate Organic Carbon).

10. Process according to claim 9, wherein, before at least the part of the Al-depleted liquid fraction is mixed with the bauxite ore, water is evaporated from the Al-depleted liquid fraction.

11. Process according to any preceding claim, wherein the second solid fraction is washed to recover sodium-comprising components contained in the second solid fraction.

12. Process according to any preceding claim, further comprising preparing the alkaline substance by mixing a part of the Al-depleted liquid fraction with an alkaline, wherein the alkaline is a liquid solution, in particular an alkaline aqueous solution that comprises at least one or more of: NaOH, Na₂CO₃, Na[Al(OH)₄] and in addition least one or more of: NaCl, Na₂SO₄, Na₂SiO₃, Na₂C₂O₄, NOOC (Non Oxalate Organic Carbon).

13. System (10) for producing alumina from bauxite ore in a continuous steady-state manner, wherein the system (10) is configured to carry out the process according to any one of claims 1 to 12, comprising
a first digester (50) having an inlet for a first bauxite alkaline mixture and an outlet for a first reaction product comprising a first solid fraction and a first liquid fraction,
a second digester (70) having an inlet for a second bauxite alkaline mixture and an outlet for a second reaction product comprising a second solid fraction and a second liquid fraction,
a first solid-liquid separator (55) for separating the first liquid fraction from the first solid fraction having an inlet that is connected with the outlet of the first digester (50) and having an outlet for the first solid fraction and an outlet for the first liquid fraction, wherein the outlet for the first liquid fraction of the first solid-liquid separator (55) is in fluid communication with the inlet of the second digester (70) for the second bauxite alkaline mixture via a line, and a line (22) wherein bauxite slurry is added to the first liquid fraction flowing along the line, and wherein a further line (56) that connects the outlet for the first solid fraction of the first solid-liquid separator (55) is in connection with an outside of the system (10),
a second solid-liquid separator (80) for separating the second liquid fraction from the second solid fraction having an inlet that is in fluid communication with the outlet of the second digester (70), and having an outlet for the second solid fraction and an outlet for the second liquid fraction,
a precipitation vessel (100) having an inlet that is in fluid communication with the outlet for the second liquid fraction of the second solid-liquid separator (80) and having an outlet for Al-depleted liquid fraction and an outlet for solid AI-compounds, wherein the precipitation vessel (100) is configured to precipitate solid Al-compounds from the second liquid fraction,
a drying apparatus that is connected with the outlet for solid Al-compounds for drying the solid Al-compounds such as to obtain alumina,
wherein a means for reducing pressure and temperature (90) is in an upstream-downstream direction provided between the outlet for the second liquid phase of the second solid-liquid separator (80) and the inlet of the precipitation vessel (100), and wherein during use of the system a pressure of the second reaction product entering the inlet of the second sold-liquid separator (80) is equal to or higher than a pressure in the second digester (70).

## Patentansprüche

1. Verfahren zur Herstellung von Aluminiumoxid aus Bauxiterz auf eine kontinuierliche, stabile Art und Weise, umfassend:
(a) Herstellen einer Bauxitaufschlämmung durch Mischen des Bauxiterzes mit wenigstens einem Teil einer Al-verarmten flüssigen Fraktion (S100),
(b) Trennen der Bauxitaufschlämmung in wenigstens eine erste Bauxitaufschlämmungsteilmenge und eine zweite Bauxitaufschlämmungsteilmenge (S200);
(c) Mischen der ersten Bauxitaufschlämmungsteilmenge mit einer alkalischen Substanz, um ein erstes Bauxit-Alkali-Gemisch zu erhalten (S300);
(d) Halten des ersten Bauxit-Alkali-Gemischs innerhalb eines ersten Temperaturbereichs über einen ersten Zeitraum, um ein erstes Reaktionsprodukt zu erhalten, das eine erste feste Fraktion und eine erste flüssige Fraktion umfasst (S400);
(e) Trennen der ersten festen Fraktion von der ersten flüssigen Fraktion (S500),
(f) Mischen der ersten flüssigen Fraktion mit der zweiten Bauxitaufschlämmungsteilmenge, um ein zweites Bauxit-Alkali-Gemisch zu erhalten (S600),
(g) Halten des zweiten Bauxit-Alkali-Gemischs innerhalb eines zweiten Temperaturbereichs über einen zweiten Zeitraum und oberhalb des Umgebungsdrucks, um ein zweites Reaktionsprodukt zu erhalten, das eine zweite feste Fraktion und eine zweite flüssige Fraktion umfasst (S700);
(h) Trennen der zweiten festen Fraktion von der zweiten flüssigen Fraktion vor einem Reduzieren des Drucks wenigstens der zweiten flüssigen Fraktion auf den Umgebungsdruck (S800);
(i) Reduzieren des Drucks der zweiten flüssigen Fraktion, und optional außerdem des Drucks der zweiten festen Fraktion, auf den Umgebungsdruck (S900) ;
(j) Ausfällen von Al-Verbindungen aus der zweiten flüssigen Fraktion nach dem Reduzieren des Drucks derselben, um feste Al-Verbindungen und die Al-verarmte flüssige Fraktion zu erhalten (S1000) ;
(k) Trocknen der festen Al-Verbindungen, um Aluminiumoxid zu erhalten (S1100),
wobei der erste Temperaturbereich niedriger als der zweite Temperaturbereich ist und wobei der erste Zeitraum kürzer als der zweite Zeitraum ist.

2. Verfahren nach Anspruch 1, wobei die zweite Bauxitaufschlämmungsteilmenge vor dem Mischen der ersten flüssigen Fraktion mit der zweiten Bauxitaufschlämmungsteilmenge zum Erhalten des zweiten Bauxit-Alkali-Gemischs desilifiziert wird.

3. Verfahren nach Anspruch 1 oder 2, wobei der erste Zeitraum 1 - 30 Minuten beträgt.

4. Verfahren nach einem vorhergehenden Anspruch, wobei der erste Temperaturbereich 100 - 135 °C beträgt.

5. Verfahren nach einem vorhergehenden Anspruch, wobei der zweite Zeitraum 30 - 90 Minuten beträgt.

6. Verfahren nach einem vorhergehenden Anspruch, wobei der zweite Temperaturbereich 140 - 180 °C beträgt.

7. Verfahren nach einem vorhergehenden Anspruch, wobei ein Gewichtsverhältnis pro Zeiteinheit der ersten Bauxitaufschlämmungsteilmenge zu der zweiten Bauxitaufschlämmungsteilmenge zwischen 1 : 1 und 4 : 1 liegt.

8. Verfahren nach einem vorhergehenden Anspruch, wobei das Ausfällen von Al-Verbindungen aus der zweiten flüssigen Fraktion ein Zugeben wenigstens eines Teils der zuvor erhaltenen Al-Verbindungen zu der zweiten flüssigen Fraktion als Ausfällungskeime umfasst.

9. Verfahren nach einem vorhergehenden Anspruch, wobei die alkalische Substanz eine flüssige Lösung ist, insbesondere eine alkalische wässrige Lösung, die wenigstens eines oder mehrere der Folgenden umfasst: NaOH, Na₂CO₃, Na[Al(OH)₄] und außerdem wenigstens eines oder mehrere der Folgenden: NaCl, Na₂SO₄, Na₂SiO₃, Na₂C₂O₄, NOOC (*Non Oxalate Organic Carbon* - nicht als Oxalat vorliegender organischer Kohlenstoff).

10. Verfahren nach Anspruch 9, wobei, bevor wenigstens der Teil der Al-verarmten flüssigen Fraktion mit dem Bauxiterz gemischt wird, Wasser aus der Al-verarmten flüssigen Fraktion verdampft wird.

11. Verfahren nach einem vorhergehenden Anspruch, wobei die zweite feste Fraktion gewaschen wird, um Natrium umfassende Bestandteile, die in der zweiten flüssigen Fraktion enthalten sind, zurückzugewinnen.

12. Verfahren nach einem vorhergehenden Anspruch, das ferner ein Herstellen der alkalischen Substanz durch Mischen eines Teils der Al-verarmten flüssigen Fraktion mit einem Alkali umfasst, wobei das Alkali eine flüssige Lösung ist, insbesondere eine alkalische wässrige Lösung, die wenigstens eines oder mehrere der Folgenden umfasst: NaOH, Na₂CO₃, Na[Al(OH)₄] und außerdem wenigstens eines oder mehrere der Folgenden: NaCl, Na₂SO₄, Na₂SiO₃, Na₂C₂O₄, NOOC (*Non Oxalate Organic Carbon* - nicht als Oxalat vorliegender organischer Kohlenstoff).

13. System (10) zur Herstellung von Aluminiumoxid aus Bauxiterz auf eine kontinuierliche, stabile Art und Weise, wobei das System (10) dazu ausgestaltet ist, das Verfahren nach einem der Ansprüche 1 bis 12 auszuführen, Folgendes umfassend:
einen ersten Autoklaven (50) mit einem Einlass für ein erstes Bauxit-Alkali-Gemisch und einem Auslass für ein erstes Reaktionsprodukt, das eine erste feste Fraktion und eine erste flüssige Fraktion umfasst,
einen zweiten Autoklaven (70) mit einem Einlass für ein zweites Bauxit-Alkali-Gemisch und einem Auslass für ein zweites Reaktionsprodukt, das eine zweite feste Fraktion und eine zweite flüssige Fraktion umfasst,
eine erste Fest-Flüssig-Trenneinrichtung (55) zum Trennen der ersten flüssigen Fraktion von der ersten festen Fraktion mit einem Einlass, der mit dem Auslass des ersten Autoklaven (50) verbunden ist, und mit einem Auslass für die erste feste Fraktion und einem Auslass für die erste flüssige Fraktion, wobei der Auslass für die erste flüssige Fraktion der ersten Fest-Flüssig-Trenneinrichtung (55) über eine Leitung mit dem Einlass des zweiten Autoklaven (70) für das zweite Bauxit-Alkali-Gemisch in Fließverbindung steht, und einer Leitung (22), wobei Bauxitaufschlämmung zu der ersten flüssigen Fraktion, welche die Leitung entlangfließt, zugegeben wird und wobei eine weitere Leitung (56), die den Auslass für die erste feste Fraktion der ersten Fest-Flüssig-Trenneinrichtung (55) verbindet, mit einer Umgebung des Systems (10) in Verbindung steht,
eine zweite Fest-Flüssig-Trenneinrichtung (80) zum Trennen der zweiten flüssigen Fraktion von der zweiten festen Fraktion mit einem Einlass, der mit dem Auslass des zweiten Autoklaven (70) verbunden ist, und mit einem Auslass für die zweite feste Fraktion und einem Auslass für die zweite flüssige Fraktion,
ein Fällungsgefäß (100) mit einem Einlass, der mit dem Auslass für die zweite flüssige Fraktion der zweiten Fest-Flüssig-Trenneinrichtung (80) in Fließverbindung steht, und mit einem Auslass für Al-verarmte flüssige Fraktion und einem Auslass für feste Al-Verbindungen, wobei das Fällungsgefäß (100) dazu ausgestaltet ist, feste Al-Verbindungen aus der zweiten flüssigen Fraktion auszufällen,
eine Trockenvorrichtung, die mit dem Auslass für feste Al-Verbindungen verbunden ist, zum Trocknen der festen Al-Verbindungen, um Aluminiumoxid zu erhalten,
wobei ein Mittel zum Reduzieren des Drucks und der Temperatur (90) in einer Stromaufwärts-Stromabwärts-Richtung zwischen dem Auslass für die zweite flüssige Phase der zweiten Fest-Flüssig-Trenneinrichtung (80) und dem Einlass des Fällungsgefäßes (100) vorgesehen ist und wobei während der Nutzung des Systems ein Druck des zweiten Reaktionsprodukts, das in den Einlass der zweiten Fest-Flüssig-Trenneinrichtung (80) eintritt, gleich oder höher als ein(em) Druck in dem zweiten Autoklaven (70) ist.

## Revendications

1. Procédé de production d'alumine à partir de minerai de bauxite d'une manière continue en régime stable comprenant
(a) la préparation d'une suspension de bauxite en mélangeant le minerai de bauxite avec au moins une partie d'une fraction liquide appauvrie en Al (S100),
(b) la séparation de la suspension de bauxite en au moins une première partie de suspension de bauxite et une seconde partie de suspension de bauxite (S200) ;
(c) le mélange de la première partie de suspension de bauxite avec une substance alcaline pour obtenir un premier mélange alcalin de bauxite (S300) ;
(d) le maintien du premier mélange alcalin de bauxite dans une première plage de températures pendant une première période de temps de sorte à obtenir un premier produit de réaction comprenant une première fraction solide et une première fraction liquide (S400) ;
(e) la séparation de la première fraction solide de la première fraction liquide (S500),
(f) le mélange de la première fraction liquide avec la seconde partie de suspension de bauxite de sorte à obtenir un second mélange alcalin de bauxite (S600),
(g) le maintien du second mélange alcalin de bauxite dans une seconde plage de températures pendant une seconde période de temps et au-dessus de la pression ambiante, de sorte à obtenir un second produit de réaction comprenant une seconde fraction solide et une seconde fraction liquide (S700) ;
(h) la séparation de la seconde fraction solide de la seconde fraction liquide avant la réduction de la pression d'au moins la seconde fraction liquide à la pression ambiante (S800) ;
(i) la réduction de la pression de la seconde fraction liquide, et éventuellement en outre de la pression de la seconde fraction solide, à la pression ambiante (S900) ;
(j) la précipitation des composés d'Al de la seconde fraction liquide après la réduction de la pression de sorte à obtenir des composés d'Al solides et la fraction liquide appauvrie en Al (S1000) ;
(k) le séchage des composés d'Al solides de sorte à obtenir de l'alumine (S1100),
dans lequel la première plage de températures est inférieure à la seconde plage de températures, et dans lequel la première période de temps est plus courte que la seconde période de temps.

2. Procédé selon la revendication 1, dans lequel la seconde partie de suspension de bauxite est désilicatée avant le mélange de la première fraction liquide avec la seconde partie de suspension de bauxite pour obtenir le second mélange alcalin de bauxite.

3. Procédé selon la revendication 1 ou 2, dans lequel la première période de temps est de 1 à 30 minutes.

4. Procédé selon l'une quelconque des revendications précédentes, dans lequel la première plage de températures est de 100 à 135 °C.

5. Procédé selon l'une quelconque des revendications précédentes, dans lequel la seconde période de temps est de 30 à 90 minutes.

6. Procédé selon l'une quelconque des revendications précédentes, dans lequel la seconde plage de températures est de 140 à 180 °C.

7. Procédé selon l'une quelconque des revendications précédentes, dans lequel un rapport pondéral par unité de temps de la première partie de suspension de bauxite à la seconde partie de suspension de bauxite est compris entre 1:1 et 4:1.

8. Procédé selon l'une quelconque des revendications précédentes, dans lequel la précipitation des composés d'Al de la seconde fraction liquide comprend l'ajout d'au moins une partie des composés d'Al obtenus précédemment à la seconde fraction liquide en tant que germes de précipitation.

9. Procédé selon l'une quelconque des revendications précédentes, dans lequel la substance alcaline est une solution liquide, en particulier une solution aqueuse alcaline qui comprend au moins un ou plusieurs parmi : NaOH, Na₂CO₃, Na[Al(OH)₄] et en outre au moins un ou plusieurs parmi : NaCl, Na₂SO₄, Na₂SiO₃, Na₂C₂O₄, NOOC (Non Oxalate Organic Carbon) .

10. Procédé selon la revendication 9, dans lequel, avant qu'au moins la partie de la fraction liquide appauvrie en Al ne soit mélangée au minerai de bauxite, l'eau est évaporée de la fraction liquide appauvrie en Al.

11. Procédé selon l'une quelconque des revendications précédentes, dans lequel la seconde fraction solide est lavée pour récupérer les composants comprenant du sodium contenus dans la seconde fraction solide.

12. Procédé selon l'une quelconque des revendications précédentes, comprenant en outre la préparation de la substance alcaline en mélangeant une partie de la fraction liquide appauvrie en Al avec un alcalin, dans lequel l'alcalin est une solution liquide, en particulier une solution aqueuse alcaline qui comprend au moins un ou plusieurs parmi : NaOH, Na₂CO₃, Na[Al(OH)₄] et en outre au moins un ou plusieurs parmi : NaCl, Na₂SO₄, Na₂SiO₃, Na₂C₂O₄, NOOC (Non Oxalate Organic Carbon).

13. Système (10) de production d'alumine à partir de minerai de bauxite d'une manière continue en régime stable, le système (10) étant configuré pour réaliser le procédé selon l'une quelconque des revendications 1 à 12, comprenant
un premier digesteur (50) ayant une entrée pour un premier mélange alcalin de bauxite et une sortie pour un premier produit de réaction comprenant une première fraction solide et une première fraction liquide,
un second digesteur (70) ayant une entrée pour un second mélange alcalin de bauxite et une sortie pour un second produit de réaction comprenant une seconde fraction solide et une seconde fraction liquide,
un premier séparateur solide-liquide (55) pour séparer la première fraction liquide de la première fraction solide ayant une entrée qui est connectée à la sortie du premier digesteur (50) et ayant une sortie pour la première fraction solide et une sortie pour le première fraction liquide, la sortie pour la première fraction liquide du premier séparateur solide-liquide (55) étant en communication fluidique avec l'entrée du second digesteur (70) pour le second mélange alcalin de bauxite par l'intermédiaire d'une conduite, et une conduite (22) dans laquelle une suspension de bauxite est ajoutée à la première fraction liquide s'écoulant le long de la conduite, et une autre conduite (56) qui se connecte à la sortie pour la première fraction solide du premier séparateur solide-liquide (55) étant en connexion avec un extérieur du système (10),
un second séparateur solide-liquide (80) pour séparer la seconde fraction liquide de la seconde fraction solide ayant une entrée qui est en communication fluidique avec la sortie du second digesteur (70), et ayant une sortie pour la seconde fraction solide et une sortie pour la seconde fraction liquide,
un récipient de précipitation (100) ayant une entrée qui est en communication fluidique avec la sortie pour la seconde fraction liquide du second séparateur solide-liquide (80) et ayant une sortie pour la fraction liquide appauvrie en Al et une sortie pour les composés d'Al solides, le récipient de précipitation (100) étant configuré pour faire précipiter les composés d'Al solides de la seconde fraction liquide,
un appareil de séchage qui est connecté à la sortie pour les composés d'Al solides pour sécher les composés d'Al solides de sorte à obtenir de l'alumine,
dans lequel un moyen pour réduire la pression et la température (90) est dans une direction amont-aval prévue entre la sortie pour la seconde phase liquide du second séparateur solide-liquide (80) et l'entrée du récipient de précipitation (100), et dans lequel pendant l'utilisation du système, une pression du second produit de réaction entrant par l'entrée du second séparateur de liquide-solide (80) est égale ou supérieure à une pression dans le second digesteur (70).
